# EUROPÄISCHE PATENTSCHRIFT

(11) **EP 4 036 671 B1**
(45) Veröffentlichungstag und Bekanntmachung des Hinweises auf die Patenterteilung: **03.12.2025**
(21) Anmeldenummer: 22153006.6
(22) Anmeldetag: 24.01.2022
(51) Int. Cl.: G05B 19/05

(54) **MODULARE STEUERVORRICHTUNG**
MODULAR CONTROL DEVICE
DISPOSITIF DE COMMANDE MODULAIRE

(30) Priorität: 29.01.2021 DE 102021102169
(43) Veröffentlichungstag der Anmeldung: 03.08.2022
(73) Patentinhaber: Pilz GmbH & Co. KG, 73760 Ostfildern (DE)
(72) Erfinder: Müller, Udo, 73760 Ostfildern (DE); Gruber, Winfried, 73760 Ostfildern (DE); Veil, Richard, 73760 Ostfildern (DE); Digel, Johannes, 73760 Ostfildern (DE); Raidt, Stephan, 73760 Ostfildern (DE); Riecker, Jürgen, 73760 Ostfildern (DE)
(74) Vertreter: Witte, Weller & Partner Patentanwälte mbB

(56) Entgegenhaltungen:
- EP-A1- 2 544 058
- EP-A2- 1 857 900
- DE-A1- 102012 101 516

## Beschreibung

Die vorliegende Erfindung betrifft eine modulare Steuervorrichtung sowie ein Kopfmodul für eine solche Vorrichtung. Ferner betrifft die Erfindung ein entsprechendes Verfahren.

Steuervorrichtungen sind im Bereich der Automatisierungstechnik grundsätzlich bekannt. Ihre Aufgabe ist das Steuern und Regeln von technischen Anlagen, Maschinen oder Prozessen. Man unterscheidet zwischen verbindungsprogrammierten Steuerungen, die mittels einer festverdrahteten Logik Steuerungs- und Regelungsaufgaben wahrnehmen, und speicherprogrammierbaren Steuerungen, die frei programmierbar sind und so verschiedene Steuerungs- und Regelungsaufgaben ausführen können. Aufgrund ihrer Flexibilität und Anpassbarkeit haben sich Letztere für komplexe oder sich dynamisch ändernde Steuerungs- und Regelungsaufgaben der Prozess- und Automatisierungstechnik durchgesetzt.

Eine Steuervorrichtung bezeichnet man als modular, wenn sie sich aus einzelnen Komponenten, die jeweils unterschiedliche Aufgaben erfüllen, zusammensetzt. In der Regel verfügt eine modulare Steuervorrichtung mindestens über eine zentrale, auch als Kopfmodul bezeichnete, Recheneinheit, die regelmäßig das erste Modul einer Modulreihe bildet. Weitere Module der Modulreihe sind unter anderem Ein- und Ausgangsmodule, welche eine Verbindung zur Peripherie der technischen Anlage herstellen und daher auch unter dem einheitlich Begriff Peripheriemodul zusammengefasst werden. Die Eingangsmodule erfassen Zustände der technischen Anlage oder Maschine, indem deren Eingänge mit entsprechenden Sensoren verbunden werden. Die erfassten Zustände zu einem bestimmten Zeitpunkt werden als Prozessabbild der Eingänge (PAE) bezeichnet. Die Ausgangsmodule steuern die technische Anlage oder Maschine gemäß der gewünschten Steuerungs- oder Regelaufgabe sowie in Abhängigkeit der Eingänge an. Hierfür sind die Ausgänge eines Ausgangsmoduls mit entsprechenden Aktoren verbunden. Die von dem Ausgangsmodul gesetzten Ausgänge werden als Prozessabbild der Ausgänge (PAA) bezeichnet.

Spezielle Steuervorrichtungen sind sichere Steuervorrichtungen (auch Sicherheitssteuerungen oder Failsafe-(FS)-Steuerungen genannt). Diese erfüllen die gleichen Funktionen wie normale Steuervorrichtungen, unterscheiden sich aber darin, dass sie zusätzlich sicherheitsgerichtete Aufgaben wahrnehmen. Sicherheitssteuerungen ermöglichen es, Sicherheit ähnlich wie bei normalen Steuervorrichtung per Programmierung zu verschalten. Während sich Sicherheitssteuerungen in ihrer grundlegenden Funktion nur unwesentlich von normalen Steuervorrichtungen für Standardaufgaben unterscheiden, verfügen diese intern jedoch über zusätzlich Hard- und Software, welche die sicherheitsgerichteten Funktionen wahrnehmen. Die zusätzliche Hard- und Software spiegelt sich maßgeblich in einer redundanten Auslegung wesentlicher Komponenten einer Steuervorrichtung wieder sowie in Testeinrichtungen, die die Funktionsfähigkeit einzelner Komponenten sicherstellen können.

Eine besondere Fehlerart, die Sicherheitssteuerungen berücksichtigen müssen, sind sogenannte Ausfälle aufgrund gemeinsamer Ursache (engl. common cause failures CCF), d.h. Ausfälle, die als Folge einer einzelnen Fehlerursache oder eines einzelnen Ereignisses auftreten. Eine Sicherheitssteuerung muss diese Fehler beherrschen können, insbesondere dann, wenn diese in unerwünschter Weise eine Redundanz eines sicherheitsrelevanten Teilsystems aufheben. Üblicherweise begegnet man CCF mit Diversität, d.h. durch die Verwendung unterschiedlicher Bauteile für die Bereitstellung einer bestimmten Funktion. Diversität hilft aber nur bedingt bei CCF, die durch eine gemeinsame Spannungsversorgung hervorgerufen werden, bspw. durch eine Überspannung. Hierfür sind andere Ansätze notwendig, sofern man nicht auf eine zweite unabhängige Spannungsversorgung zurückgreifen kann oder will.

Sicherheitssteuerungen realisieren zusammen mit den an ihnen angeschlossenen Sensoren und Aktoren Sicherheitsfunktionen zum Schutz von Bedienpersonal, der Umwelt oder Gütern. Zur Spezifizierung der Anforderung für die Sicherheitsintegrität von Sicherheitsfunktionen, die einem sicherheitsbezogenen System zugeordnet werden, unterscheiden die einschlägigen Normen (EN 61508) zwischen vier Stufen. Der Sicherheits-Integritätslevel 4 (SIL4) stellt dabei die höchste Stufe der Sicherheitsintegrität und der Sicherheits-Integritätslevel 1 (SIL1) die niedrigste Stufe dar. Die im Folgenden betrachteten modularen Steuervorrichtungen sind Sicherheitssteuerungen, die den Aufbau von Systemen bis mindestens SIL3 ermöglichen.

Anwendungen bis SIL4 nach EN 61508 oder Anwendungen mit besonderen Anforderungsprofilen (bspw. Bahnanwendungen) sind mit gängigen modularen Sicherheitssteuerungen regelmäßig nur schwer oder nur unter großem Aufwand möglich, bspw. indem zwei vollständig unabhängige und voneinander getrennt eingerichtete Sicherheitssteuerungen für die Anwendung herangezogen werden.

EP 2 544 058 A1 zeigt eine skalierbare Steuerung, bei der Module der Steuerung sowie externe Steuerungen über einen Ringbus miteinander verbunden sind und kommunizieren. Netzwerkadapter können in den Ringbus integriert werden, wobei die Steuerung den Ringbus automatisch über einen eingesetzten Adapter routet, wenn dieser ordnungsgemäß und fehlerfrei in einen entsprechenden Steckplatz eingesetzt ist.

EP 1 857 900 A1 zeigt eine Sicherheitssteuerung mit einem zentralen Kopfmodul, an welches eine Vielzahl von I/O-Modulen in Reihe angeschlossen werden können. Eine Peripheriespannung, die von den einzelnen I/O-Modulen an die Peripherie abgegeben werden kann, wird nicht jedem I/O Modul einzeln zugeführt, sondern zentral über das Kopfmodul bereitgestellt und über eine die Module verbindende Leitung weiterleitet.

Vor diesem Hintergrund ist es eine Aufgabe eine modulare Steuervorrichtung anzugeben, die Anwendungen mit einem hohen Sicherheits-Integritätslevel oder mit besonderen Anforderungsprofilen ermöglicht, CCF effektiv beherrscht und sich dennoch kostengünstig realisieren lässt.

Gemäß einem Aspekt der vorliegenden Erfindung wird diese Aufgabe gelöst durch ein Kopfmodul für eine modulare Steuervorrichtung mit redundanten Kanaleinheiten, die jeweils eine Verarbeitungseinheit sowie Ausfalloffenbarungseinheiten aufweisen, wobei die Ausfalloffenbarungseinheiten eingerichtet sind, einen Zustand der jeweiligen Kanaleinheit zu überwachen, und wobei die Verarbeitungseinheiten dazu eingerichtet sind, die Ausfalloffenbarungseinheiten kontinuierlich anzuregen, wobei mindestens eine Verarbeitungseinheit der redundanten Kanaleinheiten mit Signaladern eines Kommunikationsbusses gekoppelt ist, um eine Kommunikationsverbindung zu einem oder mehreren Peripheriemodulteilen der modularen Steuervorrichtung bereitzustellen, und wobei die Ausfalloffenbarungseinheiten dazu eingerichtet sind, in Abhängigkeit der Anregung und der Überwachung auf eine Busabschaltungseinheit einzuwirken, wobei die Busabschaltungseinheit je Kanaleinheit ein Schaltelement in den Signaladern des Kommunikationsbusses aufweist, und wobei die Ausfalloffenbarungseinheiten jeder Kanaleinheit dazu eingerichtet sind, auf das zugehörige Schaltelement gemeinschaftlich zu wirken, um die Signaladern des Kommunikationsbusses aufzutrennen, den Kommunikationsbus stillzusetzen, und jegliche Kommunikation über den Kommunikationsbus fehlersicher zu unterbinden.

Gemäß einem weiteren Aspekt wird diese Aufgabe ferner gelöst durch eine modulare Steuervorrichtung, die ein Kopfmodul der genannten Art und ein Peripheriemodulteil aufweist. Das Peripheriemodulteil weist redundante Kanaleinheiten und eine Ausgangseinheit auf, wobei die Ausgangseinheit eingerichtet ist, durch Ansteuerung durch die redundanten Kanaleinheiten, einen oder mehrere Ausgänge zu schalten, wobei die Kanaleinheiten jeweils eine Verarbeitungseinheit und Ausfalloffenbarungseinheiten aufweisen, wobei die Ausfalloffenbarungseinheiten eingerichtet sind, eine den Kanaleinheiten gemeinsame Versorgungsspannung zu überwachen, wobei die Verarbeitungseinheiten eingerichtet sind, jeweils die Ausfalloffenbarungseinheiten anzuregen, und wobei die Ausfalloffenbarungseinheiten jeder Kanaleinheit gemeinschaftlich dazu eingerichtet sind, in Abhängigkeit der Anregung und der Überwachung auf die Ausgangseinheit zu wirken, um die Ausgänge anzusteuern.

Schließlich, gemäß einem weiteren Aspekt, wird diese Aufgabe ferner gelöst durch ein entsprechendes Verfahren für ein Kopfmodul einer modularen Steuerung, wobei das Kopfmodul redundante Kanaleinheiten aufweist, die jeweils eine Verarbeitungseinheit sowie Ausfalloffenbarungseinheiten aufweisen, wobei die Ausfalloffenbarungseinheiten einen Zustand der jeweils zugehörigen Kanaleinheiten überwachen und die Verarbeitungseinheiten die Ausfalloffenbarungseinheiten kontinuierlich anregen, wobei mindestens eine der Verarbeitungseinheiten mit Signaladern eines Kommunikationsbusses gekoppelt ist, um eine Kommunikationsverbindung zu einem oder mehreren Peripheriemodulteilen der modularen Steuervorrichtung bereitzustellen, und wobei die Ausfalloffenbarungseinheiten auf eine Busabschaltungseinheit wirken, wobei die Busabschaltungseinheit je Kanaleinheit ein Schaltelement in den Signaladern des Kommunikationsbusses aufweist, und wobei die Ausfalloffenbarungseinheiten jeder Kanaleinheit auf das zugehörige Schaltelement gemeinschaftlich wirken, um die Signaladern des Kommunikationsbus aufzutrennen, den Kommunikationsbus stillzusetzen, und jegliche Kommunikation über den Kommunikationsbus fehlersicher zu unterbinden.

Es ist somit eine Idee eine modulare Sicherheitssteuerung so anzupassen, dass durch Erweiterungen im Kopfmodul und ggf. den Peripheriemodulen ein Zusammenwirken zwischen diesen möglich ist, sodass Anwendungen mit hohen Sicherheitsanforderungen realisiert werden können. Die Erweiterungen können eine mehrkanalige Auslegung der Peripheriemodule sowie zusätzliche Ausfalloffenbarungseinheiten in dem Kopfmodul und den Peripheriemodulen aufweisen. Durch die spezielle Aufteilung der Erweiterungen, eine definierte Kommunikationsbeziehung sowie eine entsprechend ausgelegte Spannungsversorgung können durch die Vorrichtungen Anwendungen mit hohen Sicherheitsanforderungen realisiert werden.

Das Kopfmodul sowie die Peripheriemodulteile können mehrkanalig ausgebildet sein, sodass eine Verbindung nach dem Black-Channel Prinzip über einen Kommunikationsbus möglich ist. Die Peripheriemodulteile können zudem eigensicher und hinsichtlich einer zu implementierenden Sicherheitsfunktion unabhängig von dem zugehörigen Kopfmodul sein. Ferner können sowohl das Kopfmodul als auch die Peripheriemodulteile eine Zustandsüberwachung, insbesondere eine Spannungsüberwachung, implementieren, die im Fall eines Fehlzustands, bspw. im Fall einer Überspannung, einen sicheren Zustand unabhängig davon herbeiführt, ob der Fehlzustand im Kopfmodul oder in den Peripheriemodulen auftritt. Hierfür wirkt eine Zustandsüberwachung im Kopfmodul auf eine im Kopfmodul integrierte Busabschaltungseinheit, welche eine Kommunikation zwischen dem Kopfmodul und den Peripheriemodulteilen unterbrechen kann. Eine Zustandsüberwachung in den Peripheriemodulteilen kann ferner direkt auf die Ausgänge der Sicherheitssteuerung wirken, um diese im Fehlerfall auszuschalten.

Die Abschaltung des Kommunikationsbusses in Kombination mit unabhängigen Ausfalloffenbarungseinheiten ermöglicht es, die Kommunikation zwischen dem Kopfmodul und den Peripheriemodulen zu trennen, so dass der Fall beherrscht werden kann, dass zeitgleich beide Verarbeitungseinheiten ausfallen, diese dennoch das gleiche falsche Prozessbild der Ausgänge berechnen und darauf basierend falsche, wenngleich gültige, Telegramme erzeugen und diese über den Bus übertragen.

Das Zusammenwirken der in der beanspruchten Form geänderten Komponenten einer modularen Steuervorrichtung ermöglicht somit die Realisierung einer Sicherheitsfunktion mit einer einzelnen modularen Steuervorrichtung für Anwendungen mit einem höheren Anforderungsprofil als SIL3, da u.a. auch CCF angemessen berücksichtigt werden können. Die eingangsgenannte Aufgabe ist somit vollständig gelöst.

In einer weiteren Ausgestaltung des Kopfmoduls können die Ausfalloffenbarungseinheiten je Kanaleinheit eine Überwachungseinheit und eine Ausfallerkennungseinheit aufweisen, wobei die Überwachungseinheiten eingerichtet sind, Netzteile der Kanaleinheiten zu überwachen, und wobei die Ausfallerkennungseinheiten einrichtet sind, in Abhängigkeit der Anregung ein Signal bereitzustellen.

Die Überwachungseinheiten können bspw. die Versorgungsspannung auf Über- und Unterspannungen hin überwachen. Die Ausfallerkennungseinheiten können bspw. eine Watchdog-Schaltung realisieren. Die Überwachungseinheiten und Ausfallerkennungseinheiten bilden zusammen die Ausfalloffenbarungseinheiten. Sie können insbesondere unabhängig voneinander implementiert sein, d.h. die Überwachungseinheit und die Ausfallerkennungseinheit einer Kanaleinheit sind unabhängig von einer Überwachungseinheit und einer Ausfallerkennungseinheit der jeweils anderen Kanaleinheit.

Durch die Busabschaltungseinheit werden die signaltragenden Adern des Kommunikationsbusses aufgetrennt, um den Kommunikationsbus stillzusetzen. Damit wird auf einfache und effektive Weise jede Kommunikation über den Bus fehlersicher unterbunden.

In einer weiteren Ausgestaltung des Kopfmoduls können die Überwachungseinheiten jeder Kanaleinheit eingerichtet sein, in Abhängigkeit der Überwachung ein dynamisches Steuersignal zu erzeugen, um auf das jeweils zugehörige Schaltelement zu wirken, insbesondere über eine jeweils zugehörige Ladungspumpe.

Gemäß dieser Ausgestaltung erfolgt somit eine dynamische Ansteuerung der Busabschaltungseinheit, wodurch effektiv "Stuck-at-High"-Fehler ausgeschlossen werden können. Die Busabschaltungseinheit ermöglicht eine Kommunikation über den Bus nur dann, wenn das dynamische Signal vorhanden ist. Hierfür kann eine Ladungspumpe vorgesehen sein, die sich nur aus dem Wechselanteil eines Signals speist und ein Schaltelement in der Busabschaltungseinheit betätigt. Die Ausgestaltung trägt somit weiter zur Eigensicherheit des Kopfmoduls bei.

In einer weiteren Ausgestaltung des Kopfmoduls können die Ausfallerkennungseinheiten eingerichtet sein, in Abhängigkeit der Anregung der jeweiligen Verarbeitungseinheit die Erzeugung des dynamischen Steuersignals zu unterbrechen.

Gemäß dieser Ausgestaltung ist die Ausfallerkennungseinheit mit der Überwachungseinheit über eine logische "UND"-Verknüpfung verbunden. Bspw. kann die als Watchdog ausgebildete Ausfallerkennungseinheit beim Ausbleiben einer Anregung durch die zugehörige Verarbeitungseinheit, das dynamische Signal auf "Masse" ziehen und somit abschalten. Eine "UND"-Verknüpfung der Überwachungseinheiten kann so einfach, effektiv und sicher realisiert werden.

In einer weiteren Ausgestaltung des Kopfmoduls kann das Kopfmodul mindestens einen Längskondensator, der in einem Signalpfad der Überwachungseinheit und der Ausfallerkennungseinheit in jeder Kanaleinheit zwischen der Verarbeitungseinheit und der Busabschaltungseinheit angeordnet ist, aufweisen.

Über den Längskondensator ist eine Entkopplung im Signalpfad von der Verarbeitungseinheit zu der Busabschaltungseinheit realisierbar.

In einer weiteren Ausgestaltung des Kopfmoduls können die Kanaleinheiten eingerichtet sein, ausschließlich über den Kommunikationsbus mit Peripheriemodulteilen der modularen Steuervorrichtung zu kommunizieren.

Gemäß dieser Ausgestaltung kommunizieren das Kopfmodul und die Peripheriemodulteile ausschließlich über den Kommunikationsbus miteinander, auf den die Busabschaltungseinheit wirken kann. Da das Kopfmodul den Kommunikationsbus im Fehlerfall stillsetzt, werden keine Nachrichten mehr an die Peripheriemodule gesendet, sodass diese ihre Ausgänge ausschalten, um einen sicheren Zustand herbeizuführen.

In einer weiteren Ausgestaltung des Kopfmoduls können die Verarbeitungseinheiten jeder Kanaleinheit dazu eingerichtet sein, untereinander über eine von dem Kommunikationsbus unabhängigen Schnittstelle zu kommunizieren und sich gegenseitig zu überwachen. Insbesondere kann ein Überspannungsschutz für die Schnittstelle in Abhängigkeit der jeweils bereitgestellten und überwachten Versorgungsspannung ausgelegt sein. Der Überspannungsschutz kann aus Widerständen gebildet sein, deren Größe an eine Abschaltspannung der Überwachungseinheiten angepasst ist

Diese Ausgestaltung trägt dazu bei, die Eigensicherheit des Kopfmoduls auf einfache Weise zu realisieren. Hierbei reicht es aus, dass die Schnittstelle durch einfache Widerstände gegen Überspannungen geschützt ist, da die Überwachungseinheit unabhängig hiervon nur eine definierte Überspannung zulässt. Der Überspannungsschutz muss daher nur bis zu einer bestimmten Spannung ausgelegt sein und lässt sich somit durch Widerstände einfach realisieren.

In einer weiteren Ausgestaltung des Kopfmoduls können die Verarbeitungseinheiten jeder Kanaleinheit dazu eingerichtet sein, einen Funktionstest der jeweils zugehörigen Überwachungseinheit und der jeweils zugehörigen Ausfallerkennungseinheit durchzuführen und ein Testergebnis zurückzulesen. Das Testergebnis kann der jeweils anderen Verarbeitungseinheit bereitgestellt werden.

Die Verarbeitungseinheiten können somit die Funktionsfähigkeit der Überwachungseinheit und der Ausfallerkennungseinheit kontinuierlich über Tests prüfen, um Fehlfunktionen dieser Einheiten ausschließen zu können. Die Ausgestaltung trägt somit weiter zur Eigenfehlersicherheit des Kopfmoduls bei.

In einer weiteren Ausgestaltung kann auch das Peripheriemodulteil die im Zusammenhang mit dem Kopfmodul beschriebenen Maßnahmen zur Eigensicherheit aufweisen. So kann die Überwachungseinheit jeder Kanaleinheit in dem Peripheriemodulteil dazu eingerichtet sein, in Abhängigkeit der Überwachung ein dynamisches Steuersignal zu erzeugen, um auf die Ausgangseinheit zu wirken. Das Wirken kann über eine Ladungspumpe erfolgen. Ferner kann die Ausfallerkennungseinheit jeder Kanaleinheit in dem Peripheriemodulteil eingerichtet sein, in Abhängigkeit der Anregung der ersten Verarbeitungseinheit die Erzeugung des dynamischen Steuersignals zu unterbrechen. Schließlich kann die Ausgangseinheit des Peripheriemodulteils galvanisch von den redundanten Kanaleinheiten getrennt sein.

Die modulare Steuervorrichtung kann in weiteren Ausgestaltungen die verschiedenen Ausführungen des Kopfmoduls bzw. des Peripheriemodulteils aufweisen. Ferner kann die modulare Steuervorrichtung ein Spannungsversorgungsmodul aufweisen, das eingerichtet ist, eine gemeinsame Modulspannung für eine Spannungsversorgung des Kopfmoduls und des Peripheriemodulteils sowie eine Peripheriespannung für die Ausgangseinheit des Peripheriemodulteils bereitzustellen. Das Spannungsversorgungsmodul kann dabei eine nicht-sichere Einheit sein.

Die modulare Steuervorrichtung kann zudem Backplane-Modulteile aufweisen, die eine Busstruktur für den Kommunikationsbus und die Spannungsversorgung bereitstellen. Die Backplane-Modulteile können mit einem oder mehreren Peripheriemodulteilen zu einem Peripheriemodul kombiniert werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines Ausführungsbeispiels eines Kopfmoduls,
- Fig. 2: eine schematische Darstellung eines Ausführungsbeispiels eines Peripheriemodulteils,
- Fig. 3: eine schematische Darstellung eines Ausführungsbeispiels einer modularen Steuervorrichtung in einer Konfiguration für Anwendungen mit einem Anforderungsprofil bis SIL3,
- Fig. 4: eine schematische Darstellung eines Ausführungsbeispiels einer modularen Steuervorrichtung in einer Konfiguration für Anwendungen mit einem höheren Anforderungsprofil als SIL3,
- Fig. 5: eine schematische Darstellung eines Ausführungsbeispiels eines Backplane-Modulteils, und
- Fig. 6: eine schematische Darstellung eines Ausführungsbeispiels eines Spannungsversorgungsmoduls.

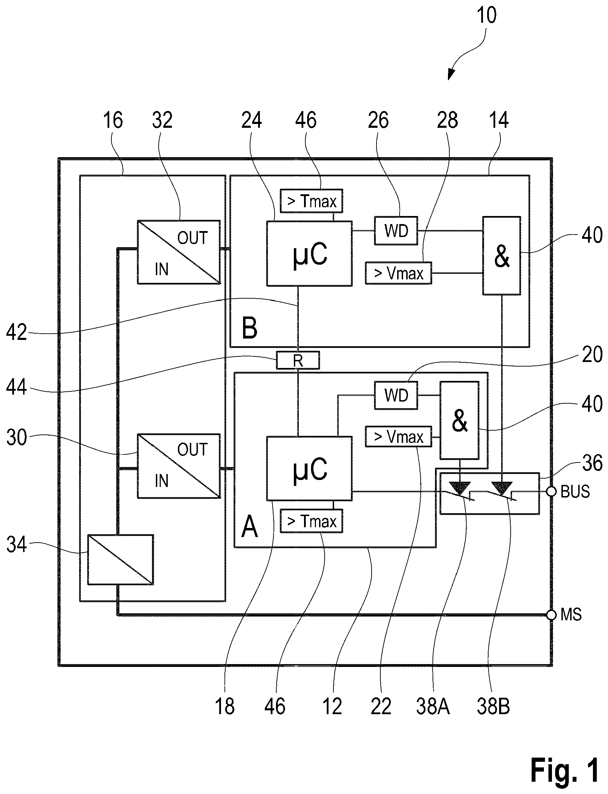

Fig. 1 zeigt eine schematische Darstellung eines Kopfmoduls für eine modulare Steuervorrichtung gemäß einem Ausführungsbeispiel der vorliegenden Erfindung. Das Kopfmodul ist seiner Gesamtheit mit der Bezugsziffer 10 bezeichnet.

Das Kopfmodul 10 weist in diesem Ausführungsbeispiel eine erste Kanaleinheit 12 und eine zweite Kanaleinheit 14 auf, die die redundanten Kanaleinheiten bilden. Ferner kann das Kopfmodul 10 eine Netzteileinheit 16 aufweisen.

Die erste Kanaleinheit 12 weist eine erste Verarbeitungseinheit 18 (µC A) sowie hier eine erste Ausfallerkennungseinheit 20 und eine erste Überwachungseinheit 22 als erste Ausfalloffenbarungseinheiten auf. Die zweite Kanaleinheit 14 weist eine zweite Verarbeitungseinheit 24 (µC B), eine zweite Ausfallerkennungseinheit 26 und eine zweite Überwachungseinheit 28 (zweite Ausfalloffenbarungseinheiten) auf. Die Einheiten können funktionsgleich sein, jedoch von unterschiedlichen Herstellern bezogen werden, um die Diversität des Systems zu erhöhen.

Die Netzteileinheit 16 kann ein erstes Netzteil 30, das eine Versorgungsspannung für die erste Kanaleinheit 12 bereitstellt, und ein zweites Netzteil 32, das eine Versorgungsspannung für die zweite Kanaleinheit 14 bereitstellt, aufweisen. Ferner kann die Netzteileinheit 16 ein drittes Netzteil 34 aufweisen, das eine dem Kopfmodul 10 zur Verfügung gestellte Modulspannung MS in eine Zwischenspannung für das erste Netzteil 30 und das zweite Netzteil 32 umsetzt. Die Modulspannung kann dem Kopfmodul 10 über einen Anschluss MS von extern, insbesondere von einem in die modulare Steuervorrichtung integrierten Spannungsversorgungsmodul, bereitgestellt werden. Die Modulspannung kann allen Modulen der modularen Steuervorrichtung zur Versorgung der modulinternen Elektronik einheitlich zur Verfügung gestellt werden.

In einem Ausführungsbeispiel kann das dritte Netzteil 34 eine Modulspannung MS von 24 V auf eine Zwischenspannung von 5 V umsetzen. Das erste Netzteil 30 und das zweite Netzteil 32 können diese Zwischenspannung getrennt voneinander für die jeweiligen Kanaleinheiten 12, 14 auf diverse Versorgungsspannungen für die Verarbeitungseinheiten 18, 24 umsetzen und bspw. eine Spannung von 3,3 V erzeugen. Die Netzteile 30, 32, 34 können in einem Ausführungsbeispiel Längsregler oder Schaltregler sein.

Die von dem ersten Netzteil 30 und dem zweiten Netzteil 32 bereitgestellte Spannung wird innerhalb der Kanaleinheiten 12, 14 den jeweiligen Überwachungseinheiten 22, 28 zugeführt. Die Überwachungseinheiten 22, 28 sind unabhängig von der jeweiligen Verarbeitungseinheit 18, 24 ausgebildet und dazu eingerichtet auf eine Überspannung oder eine Unterspannung anzusprechen. Gemäß dem vorstehenden Beispiel können die Überwachungseinheiten 22, 28 bspw. auf eine Überspannung von größer 3,5 V und eine Unterspannung kleiner 3,1 V ansprechen.

Ferner weisen die Kanaleinheiten 12, 14 jeweils eine von den Verarbeitungseinheiten 18, 24 separat eingerichtete Ausfallerkennungseinheit 20, 26 auf. Die Ausfallerkennungseinheiten 20, 26 können als sogenannter Watchdog ausgeführt sein und als Totmannschalter fungieren. Hierfür regen die Verarbeitungseinheiten 18, 24 die Ausfallerkennungseinheiten 20, 26 kontinuierlich an, bspw. indem die Verarbeitungseinheiten 18, 24 in definierten Abständen einen Trigger an die Ausfallerkennungseinheiten 20, 26 senden, um eine in den Ausfallerkennungseinheiten 20, 26 befindliche Zeitschaltuhrschaltung zurückzusetzen.

Die Ausfallerkennungseinheiten 20, 26 und die Überwachungseinheiten 22, 28 je Kanaleinheit wirken gemeinschaftlich auf eine Busabschaltungseinheit 36, die eingerichtet ist einen Kommunikationsbus stillzusetzen. Der Kommunikationsbus stellt eine Wirkverbindung zwischen dem Kopfmodul und den Peripheriemodulteilen her und dient dem Austausch von Datentelegrammen zwischen den Modulen. Die Kommunikation über den Kommunikationsbus kann durch ein Protokoll realisiert sein, welches bis SIL4 zugelassen ist und Prozessbilder zwischen dem Kopf- und den Peripheriemodulteilen in gesicherten und zudem zwangsdynamisierten Datentelegrammen transportiert.

Die Busabschaltungseinheit 36 kann den Kommunikationsbus stillsetzen, bspw. indem die Einheit Signaladern des Busses auftrennt oder auf Masse zieht. Die Signaladern des Kommunikationsbusses verbinden mindestens eine Verarbeitungseinheit (in Fig. 1 die erste Verarbeitungseinheit 18) mit einem Anschluss BUS des Kopfmoduls. Die Busabschaltungseinheit 36 kann hierzwischen angeordnet sein und je ein Schaltelement 38A, 38B pro Kanaleinheit aufweisen. Im vorliegenden Ausführungsbeispiel wirken die erste Ausfallerkennungseinheit 20 und die erste Überwachungseinheit 22 über eine logische "UND"-Verknüpfung 40 auf das erste Schaltelement 38A. Die zweite Ausfallerkennungseinheit 26 und die zweite Überwachungseinheit 28 wirken über eine weitere logische "UND"-Verknüpfung 40 auf das zweite Schaltelement 38B ein. Im Falle einer Über- oder Unterspannung oder eines abgelaufenen Watchdog wird die Kommunikation über den Kommunikationsbus unterbunden, sodass keine Telegramme mehr an die Peripheriemodulteile versandt werden. Bei eigensicheren Peripheriemodulteilen, die als Ausgangsmodul eingerichtet sind, führen die ausbleibenden Telegramme zu einer Zeitüberschreitungs-Ausnahme, was schlussendlich zur Abschaltung der Ausgänge des Ausgangsmoduls führt.

Im Kopfmodul können sich zusätzlich die Verarbeitungseinheiten 18, 24 der Kanaleinheiten 12, 14 gegenseitig über eine dedizierte Schnittstelle 42 überwachen und im Fehlerfall über Abschaltmechanismen innerhalb der Verarbeitungseinheiten 18, 24 eine entsprechende Reaktion auslösen. Bspw. können über die Schnittstelle 42 die Verarbeitungseinheiten 18, 24 gegenseitig ihre Versorgungsspannung überwachen und im Fehlerfall entsprechend reagieren. Die Schnittstelle 42 kann eine Überspannungsschutzeinrichtung 44 aufweisen.

Neben den Ausfallerkennungseinheiten 20, 26 und den Überwachungseinheiten 22, 28 können die Kanaleinheiten 12, 14 jeweils noch Temperatursensoren 46 aufweisen, die die jeweilige Temperatur der Verarbeitungseinheiten 18, 24 überwachen. Steigt die Temperatur dieser Einheiten über einen kritischen Schwellwert, wird eine entsprechende Reaktion ausgelöst und bspw. die Prozessdaten auf NULL gesetzt.

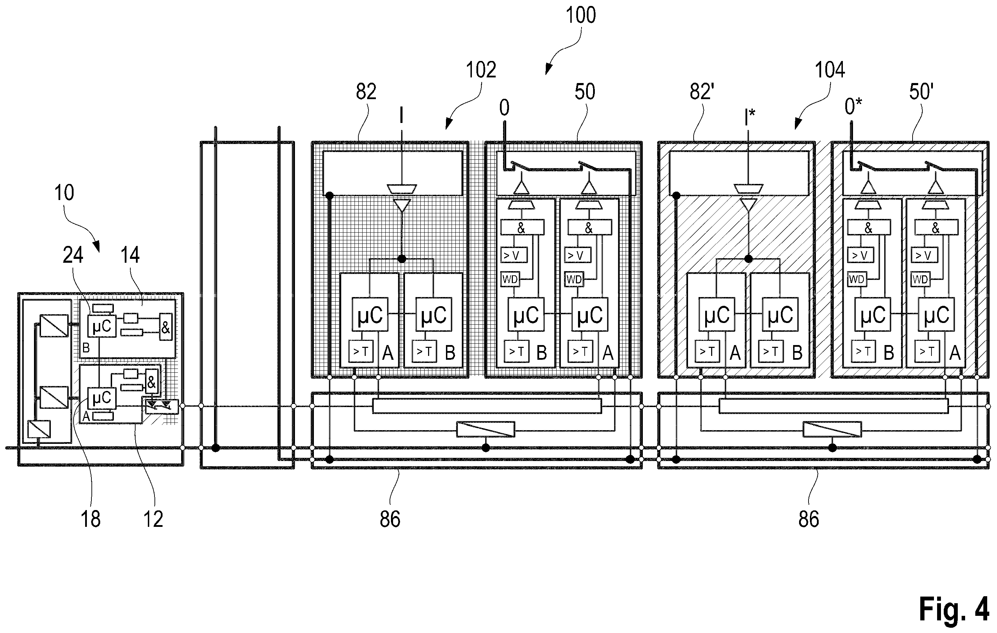

Durch den zweikanaligen Aufbau mit entsprechender Diversität der Bauteile kann das Kopfmodul 10 nach EN 61508 bis SIL3 zugelassen sein. Wie nachfolgend noch in Bezug auf Fig. 4 erläutert wird, ist es zudem möglich mit diesem Kopfmodul Anwendungen mit einem höheren Anforderungsprofil als SIL3 zu ermöglichen.

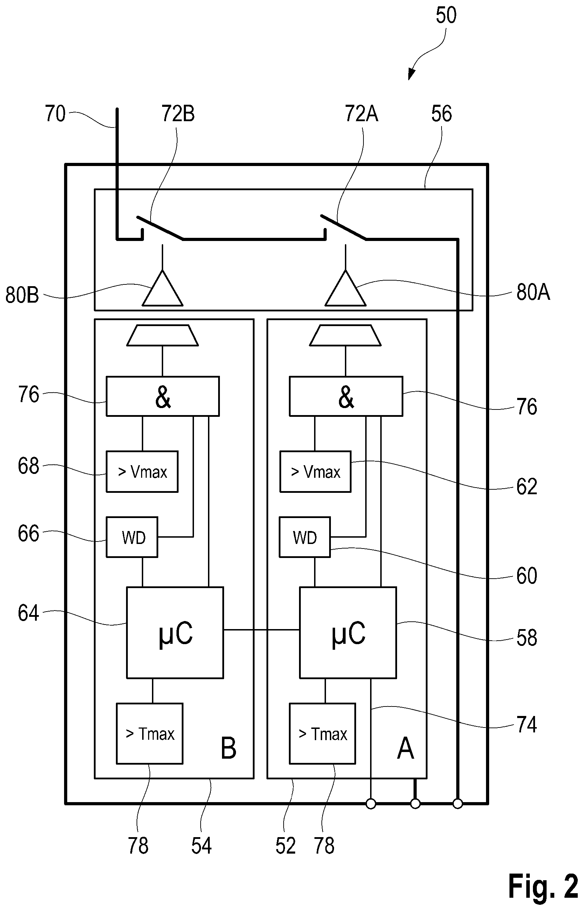

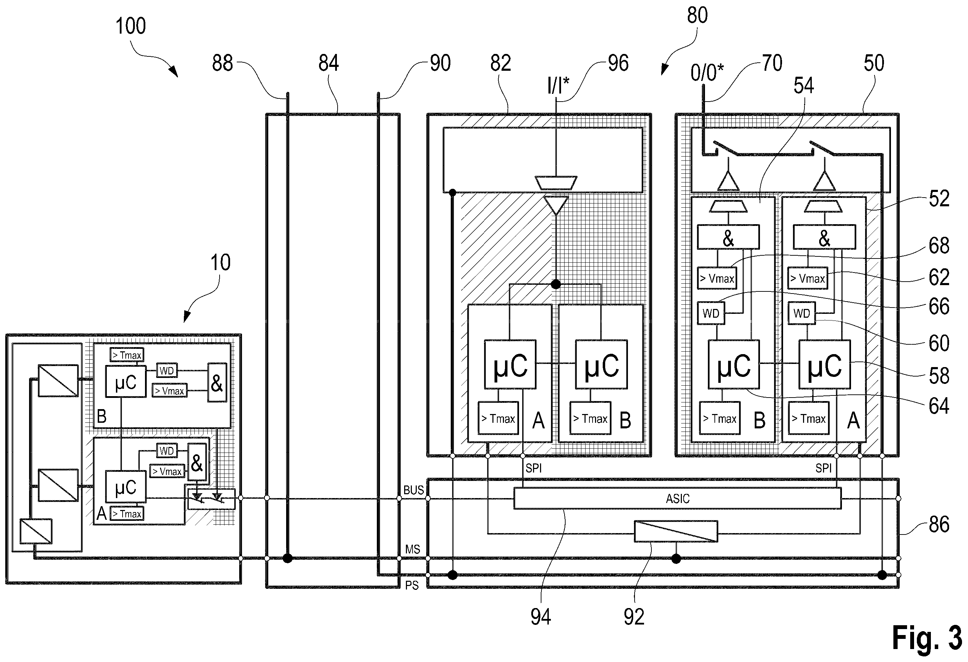

Fig. 2 zeigt eine schematische Darstellung eines Peripheriemodulteils für eine modulare Steuervorrichtung gemäß einem Ausführungsbeispiel der vorliegenden Erfindung. Das Peripheriemodulteil ist in seiner Gesamtheit mit der Bezugsziffer 50 bezeichnet. Wie nachfolgend noch in Bezug auf die Fig. 3 und 4 näher erläutert ist, kann ein Peripheriemodulteil zusammen mit einem Backplane-Modulteil ein Peripheriemodul bilden. Ebenso können mehrere Peripheriemodulteile mit einem Backplane-Modulteil ein Peripheriemodul der modularen Steuervorrichtung bilden.

Das Peripheriemodulteil 50 weist in diesem Ausführungsbeispiel eine erste Kanaleinheit 52 und eine zweite Kanaleinheit 54 auf, die die redundanten Kanaleinheiten bilden. Ferner weist das Peripheriemodulteil 50 eine Ausgangseinheit 56 auf.

Die erste Kanaleinheit 52 weist eine erste Verarbeitungseinheit 58 (µC A) sowie eine erste Ausfallerkennungseinheit 60 und eine erste Überwachungseinheit 62 als erste Ausfalloffenbarungseinheiten auf. Die zweite Kanaleinheit 54 weist eine zweite Verarbeitungseinheit 64 (µC B), eine zweite Ausfallerkennungseinheit 66 und eine zweite Überwachungseinheit 68 (zweite Ausfalloffenbarungseinheiten) auf.

Strukturell können die Kanaleinheiten 52, 54, die Verarbeitungseinheiten 58, 64, die Ausfallerkennungseinheiten 60, 66 und die Überwachungseinheiten 62, 68 analog zu den entsprechenden Einheiten des Kopfmoduls 10 ausgebildet sein. Dies betrifft auch die im Folgenden noch im Zusammenhang mit dem Kopfmodul 10 erwähnten Konkretisierungen dieser Einheiten.

Die Ausgangeinheit 56 weist mindestens einen Ausgang 70, der mit einem Aktor koppelbar ist (hier nicht dargestellt), sowie Schaltelemente 72A und 72B die den Ausgang 70 schalten können, auf. Die erste Kanaleinheit 52 steuert das erste Schaltelement 72A an und die zweite Kanaleinheit 54 steuert das zweite Schaltelement 72B an. Der Ausgang 70 wird somit redundant angesteuert. Ferner ist der Ausgang 70 über die Schaltelemente 72A und 72B mit einem Anschluss PS verbunden, an dem eine externe Peripheriespannung anliegt. Den Ausgang 70 einzuschalten bedeutet, die Schaltelemente 72A und 72B zu schließen, sodass die Peripheriespannung am Ausgang 70 anliegt. Ein an den Ausgang 70 angeschlossener Aktor kann dann bspw. ein Schütz sein, der bei eingeschalteten Ausgang 70 von der Peripheriespannung bestromt wird.

Über einen weiteren Anschluss MS am Peripheriemodulteil 50 wird diesem eine Modulspannung von extern bereitgestellt, welche die Verarbeitungseinheiten 58, 64 versorgt. Die Modulspannung kann dieselbe Spannung sein, die auch dem Kopfmodul 10 zur Verfügung steht, und kann von einem Spannungsversorgungsmodul bereitgestellt werden.

Die Verarbeitungseinheiten 58, 64 steuern die Ausgangseinheit 56 gemäß der Vorgabe des Kopfmoduls 10 an. Hierfür ist mindestens eine Verarbeitungseinheit (hier die erste Verarbeitungseinheit 58) über eine Busverbindung 74 mit dem zuvor beschriebenen Kommunikationsbus gekoppelt, um von diesem das Prozessabbild der Ausgänge (PAA) zu empfangen. Die Verarbeitungseinheiten 58, 64 verarbeiten das Prozessabbild der Ausgänge zweikanalig, wobei sie sich gegenseitig abgleichen.

Ferner ist die Ansteuerung der Ausgangseinheit 56 je Kanaleinheit noch von den Ausfallerkennungseinheiten 60, 66 und den Überwachungseinheiten 62, 68 abhängig, wie hier durch die logische "UND"-Verknüpfung 76 angedeutet ist. Die Überwachungseinheiten 62, 68 überwachen die Versorgungsspannung der Verarbeitungseinheiten 58, 64, während die Ausfallerkennungseinheiten 60, 66 je einen Watchdog für die Verarbeitungseinheiten 58, 64 implementieren. Nur bei Zustimmung aller Einheiten werden die Schaltelemente 72A, 72B betätigt und der Ausgang 70 geschaltet. Zusätzlich kann mittels Temperatursensor 78 eine Temperaturüberwachung der Verarbeitungseinheiten 58, 64 in der im Zusammenhang mit dem Kopfmodul 10 beschriebenen Weise erfolgen.

Die Ausgangseinheit 56 kann über Trenneinrichtungen 80A, 80B galvanisch von den Kanaleinheiten 52, 54 getrennt sein. Die Trenneinrichtungen 80A, 80B können Schaltungen mit Optokopplern sein, die eine Betätigung der Schaltelemente 72A, 72B durch die Kanaleinheiten 52, 54 ermöglichen, ohne hierfür galvanisch mit diesen verbunden zu sein.

Durch den zweitkanaligen Aufbau mit entsprechender Diversität der Bauteile kann das Peripheriemodulteil 50 nach EN 61508 bis SIL3 zugelassen sein. Wie nachfolgend noch erläutert wird, ist es dennoch möglich mit diesem Peripheriemodulteil in Zusammenwirken mit dem Kopfmodul Anwendungen mit einem höheren Anforderungsprofil als SIL3 zu ermöglichen.

Fig. 3 zeigt jedoch zunächst eine schematische Darstellung eines Ausführungsbeispiels einer modularen Steuervorrichtung in einer Konfiguration für Anwendungen bis SIL3. Die modulare Steuervorrichtung ist hier in ihrer Gesamtheit mit der Bezugsziffer 100 bezeichnet.

Die modulare Steuervorrichtung 100 weist ein Kopfmodul 10 sowie eine Peripheriebaugruppe 80 auf, die ein Eingangsmodulteil 82 und das zuvor beschriebene Peripheriemodulteil 50 als Ausgangsmodulteil aufweist. Ferner weist die modulare Steuervorrichtung 100 ein Spannungsversorgungsmodul 84 sowie ein Backplane-Modulteil 86 auf, welches die Peripheriebaugruppe 80 komplettiert.

Das Spannungsversorgungsmodul 84 stellt Anschlüsse 88, 90 bereit, um der modularen Steuervorrichtung 100 die zuvor beschriebene Modulspannung MS und Peripheriespannung PS zuzuführen. Das Spannungsversorgungsmodul 84 kann Maßnahmen zur Überwachung der zugeführten Spannung aufweisen (hier nicht dargestellt), muss aber grundsätzlich nicht als sichere Einheit ausgebildet sein. Die Spannungen MS und PS können durch an die Anschlüsse 88, 90 angeschlossene Netzteile (hier nicht dargestellt) bereitgestellt werden. Diese Netzteile können bspw. SELV/PLEV-Netzteil sein, wodurch sich eine sicherheitstechnische Betrachtung auf die Höhe der von dem SELV/PLEV-Netzteil bereitgestellten Spannung reduziert.

Das Spannungsversorgungsmodul 84 hat Anschlüsse, um die Modulspannung MS dem Kopfmodul bereitzustellen. Ferner hat das Spannungsversorgungsmodul 84 Anschlüsse, um die Modulspannung MS und die Peripheriespannung PS auch dem Backplane-Modulteil 86 zuzuführen. Von dem Backplane-Modulteil 86 aus gelangen die Spannungen zu dem Eingangsmodulteil und dem Ausgangsmodulteil der Peripheriebaugruppe 80. Über weitere Anschlüsse an dem Spannungsversorgungsmodul 84 kann der Kommunikationsbus von dem Kopfmodul 10 zu dem Backplane-Modulteil 86 durchgeschleift werden. Denkbar ist auch, dass das Spannungsversorgungsmodul 84 selbst über eine Verarbeitungseinheit auf den Kommunikationsbus zugreifen kann, um mit dem Kopfmodul und/oder den Peripheriemodulteilen zu kommunizieren. Die Verarbeitungseinheit kann von den Anschlüssen 88, 90, über welche die Modulspannung MS und die Peripheriespannung PS aufgenommen werden, galvanisch getrennt sein.

Das Backplane-Modulteil 86 führt den Kommunikationsbus und die Versorgungsspannungen zu den Peripheriemodulteilen. Die Peripheriemodulteile werden üblicherweise auf das Backplane-Modulteil 86 aufgesteckt. Das Backplane-Modulteil 86 kann ein Netzteil 92 aufweisen, welches die Modulspannung MS auf eine definierte Spannung zur Versorgung der Elektronikkomponenten der aufgesteckten Peripheriemodulteile umsetzt.

Das Backplane-Modulteil 86 kann ferner einen Kontrollbaustein 94, insbesondere einen ASIC (englisch: Application-Specific Integrated Circuit), aufweisen, der einen Zugriff der Peripheriemodulteile auf den Bus ermöglicht. Der Kontrollbaustein 94 empfängt und sendet Signale über den Kommunikationsbus oder leitet diese weiter. Daten, die für ein Peripheriemodulteil des Backplane-Moduls 86 bestimmt sind, empfängt der Kontrollbaustein 94 und leitet sie über eine Schnittstelle (bspw. ein SPI (Serial Peripheral Interface)) an diese weiter. Die Backplane-Modulteile 86 haben selbst keine Sicherheitsfunktion. Fehler in einem Backplane-Modulteil 86 werden durch Maßnahmen im Kopfmodul 10 oder den eigensicheren Peripheriemodulteilen erkannt und beherrscht (Black-Channel-Prinzip). Voraussetzung hierfür ist, dass die Buskommunikation über ein sicheres Busprotokoll realisiert ist. Das Busprotokoll kann ein bis SIL 4 zugelassenes Protokoll sein.

Das Eingangsmodulteil 82 kann über einen oder mehrere Eingänge 96 verfügen, um Eingangssignale von angeschlossenen Gebern aufzunehmen. Das Eingangsmodulteil 82 kann wie das Ausgangsmodulteil mit zwei Kanaleinheiten für eine zweikanalige Verarbeitung der Eingänge 96 ausgestattet sein. Hierfür wird jedes an den Eingängen 96 aufgenommene Signal an beide Kanaleinheiten weitergeleitet und von diesen verarbeitet, um zum Prozessbild der Eingänge (PAE) beizutragen, welches vom Kopfmodul 10 für alle Eingänge der modularen Steuervorrichtung generiert wird. Die Verarbeitungseinheiten der verschiedenen Kanaleinheiten überwachen sich grundsätzlich gegenseitig und gleichen die Eingangssignale ab. Die ermittelten Zustände der Eingänge werden an das Kopfmodul übertragen. Hierfür kann das Eingangsmodul bspw. über eine Schnittstelle auf den Kommunikationsbus in dem Backplane-Modulteile 86 zu greifen.

Das Kopfmodul 10 führt die Informationen über die Zustände der Eingänge zu einem einheitlichen Prozessbild der Eingänge zusammen und führt ein Anwenderprogramm aus, welches dieses Prozessbild als Eingabe berücksichtigt. Das Anwenderprogramm kann eine Liste von Anweisungen aufweisen, die in einem Zyklus nacheinander abgearbeitet werden. Die Abarbeitung des Anwenderprogramms aktualisiert das Prozessbild der Ausgänge (PAA), welches zum Ende des Zyklus an das Ausgangsmodulteil 50 übertragen wird. Das Ausgangsmodulteil 50 empfängt das Prozessbild der Ausgänge (PAA) und steuert basierend hierauf die Ausgänge 70 in der in Bezug auf Fig. 2 beschriebenen Weise an. Das heißt, das Ausgangsmodulteil 50 schaltet die Ausgänge 70 gemäß dem Prozessbild der Ausgänge ein, sofern die Verarbeitungseinheiten 58, 64 der Kanaleinheiten 52, 54 keinen Fehler entdecken und die Ausfallerkennungseinheiten 60, 66 und die Überwachungseinheiten 62, 68 dem Ansteuern der Ausgänge 70 zustimmen.

Da sowohl das Kopfmodul 10 als auch die Peripheriemodulteile bis SIL3 zugelassen sein können und die Kommunikation gemäß dem Black-Channel-Prinzip erfolgt, kann die beschriebene Architektur für Anwendungen bis SIL3 zugelassen werden. Für die Beherrschung von CCF wird keine primäre Unabhängigkeit, wie sie bspw. für Bahnanwendungen gefordert ist, benötigt, da die in Zusammenhang mit Fig. 1 und Fig. 2 beschriebenen zusätzlichen Maßnahmen in den Kopf- und dem Ausgangsmodul zusammen mit entsprechenden Rahmenbedingungen (robuste Dimensionierung kritischer Schaltungsteile, etc.) eine ausreichende Beherrschung von CCF ermöglichen.

Das Eingangsmodulteil 82 kann zwei redundante Eingänge I/I* und das Ausgangsmodulteil 50 zwei redundante Ausgänge O/O* verarbeiten und die modulare Steuervorrichtung insgesamt Anwendungen bis SIL3 ermöglichen. Die zusammenhängenden Betrachtungseinheiten im Sinne der einschlägigen Normen sind hier jeweils durch die Schraffierung in den Modulen hervorgehoben.

Ferner kann mit den beschriebenen Komponenten eine Architektur erreicht werden, die Anwendungen mit einem höheren Anforderungsprofil als SIL3 ermöglicht, ohne den Aufbau der Komponenten grundlegend zu verändern. Eine entsprechende Architektur ist in Fig. 4 gezeigt.

Fig. 4 zeigt eine schematische Darstellung eines Ausführungsbeispiels einer modularen Steuervorrichtung in einer Konfiguration für Anwendungen mit einem höheren Anforderungsprofil als SIL3. Gleiche Bezugszeichen bezeichnen gleiche Teile wie zuvor in Fig. 3, sodass auf eine erneute Beschreibung dieser Teile im Folgenden verzichtet wird.

Um mit den zuvor beschriebenen Komponenten, die nach der Norm EN 61508 keine Zulassung bis SIL4 haben, eine Architektur zu ermöglichen, die Anwendungen mit einem höheren Anforderungsprofil als SIL3 erlaubt, muss bspw. eine primäre Unabhängigkeit der Betrachtungseinheiten gewährleistet werden. Primäre Unabhängigkeit wird bspw. bei Bahnanwendungen benötigt.

Primäre Unabhängigkeit kann erreicht werden, indem die redundanten Eingänge I/I* und Ausgänge O/O* auf zwei Baugruppen 102, 104 aufgeteilt werden, die jeweils ein Ausgangsmodulteil 50, 50' und ein Eingangsmodulteil 82, 82' aufweisen und mit jeweils einem Backplane-Modulteil 86 gekoppelt sind. Das Eingangsmodulteil 82 und das Ausgangsmodulteil 50 der ersten Baugruppe 102 bilden mit der ersten Kanaleinheit 12 im Kopfmodul 10 eine erste normative Betrachtungseinheit und das Eingangsmodulteil 82' und das Ausgangsmodulteil 50' der zweiten Baugruppe 104 bilden zusammen mit der zweiten Kanaleinheit 12 im Kopfmodul 10 eine zweite normative Betrachtungseinheit (hier jeweils entsprechend schraffiert unterlegt). Jede Betrachtungseinheit wird somit durch ein eigenes Eingangsmodulteil, einen Kanal des Kopfmoduls und ein eigenes Ausgangsmodulteil gebildet. Die redundanten Eingänge I/I* und Ausgänge O/O* sind jeweils auf die Betrachtungseinheiten aufgeteilt und liegen damit auf unterschiedlichen Eingangs- bzw. Ausgangsmodulen. Somit sind die Komponenten Eingang und Ausgang voneinander getrennt und nur über die Kommunikationseinrichtung sowie Spannungsversorgung der Backplane gekoppelt.

Im Kopfmodul 10 ist eine Trennung der Kanaleinheiten 12, 14 und deren Spannungsversorgung vorzusehen, da sich hier beide Betrachtungseinheiten innerhalb eines Moduls befinden. Grundsätzlich sind verschiedene Ansätze denkbar eine solche Trennung vorzusehen. Die Erfordernisse für die Trennung können von den äußeren Umständen abhängig sein, so dass bereits einfache trennende Einrichtungen ausreichend sein können, wenn bestimmte Annahmen getroffen werden.

Bspw. verhindert die Spannungsüberwachung bei Spannungen über einer definierten Abschaltspannung (bspw. 3,5 V) die Kommunikation über den Kommunikationsbus. Daher ist eine Betrachtung der Verbindungen zwischen den Verarbeitungseinheiten 18, 24 nur bis zu dieser Abschaltspannung nötig, da bei Spannungen größer als die Abschaltspannung die Kommunikation über den Bus verhindert wird und Fehler in den Verarbeitungseinheiten daher ohne Auswirkung auf die Peripheriemodulteile sind. Mit anderen Worten kann eine Trenneinrichtung für eine Kommunikationsverbindung zwischen den Verarbeitungseinheiten an die Spannungsüberwachung angepasst sein. Diese Kommunikation erfolgt regelmäßig über E/A-Schnittstellen. Im Hinblick auf die Spannungsüberwachung ist es ausreichend, wenn in der Verbindung zwischen den Anschlüssen der E/A-Schnittstellen MELF-Widerstände angeordnet sind. Im Falle eines "Stuck-at-High"-Fehlers an einem Signal und einer Überspannung in Höhe der Abschaltspannung wird der Strom auf der Verbindungsleitung auf einen Maximalwert pro Verbindung begrenzt. Dieser Strom führt jedoch nicht zu einer Zerstörung der Verarbeitungseinheit respektive dessen Prozessorkerns. Maximal wird der Anschluss-Pin der E/A-Schnittstelle zerstört. Da bei einer Kommunikationsleitung ein Anschluss-Pin immer als Eingang (Rx) und der andere als Ausgang (Tx) konfiguriert ist, wird immer nur der Ausgangs-Pin zerstört werden. Hierbei handelt es sich jedoch nicht um ein CCF, da jeweils der Eingangs-Pin der anderen Verarbeitungseinheit nicht von dem Defekt betroffen sein wird.

Die Spannungsüberwachung sowie die Ausfallerkennungseinrichtung selbst sollten für CCF in Form einer Überspannung eingerichtet sein. Hierfür kann es ausreichend sein, wenn lediglich die Busabschalteinheit einer definierten Überspannung standhält, da die Spannungsüberwachungseinrichtung sowie die Ausfallerkennungseinrichtung diese dynamisch ansteuern und über Längskondensatoren entkoppelt werden können. Ferner kann die definierte Überspannung auf eine bestimmte Spannung begrenzt werden, bspw. indem die Versorgung des Systems aus einem SELV/PELV-Netzteil erfolgt und sich die definierte Überspannung damit auf einen Maximalwert (bspw. 60 V) begrenzen lässt.

Es versteht sich, dass nach ähnlichem Prinzip weitere Verbindungen zu den Verarbeitungseinheiten auf einfache Weise entkoppelt werden können. Auch hier können einfache MELF-Widerstände vorgesehen sein.

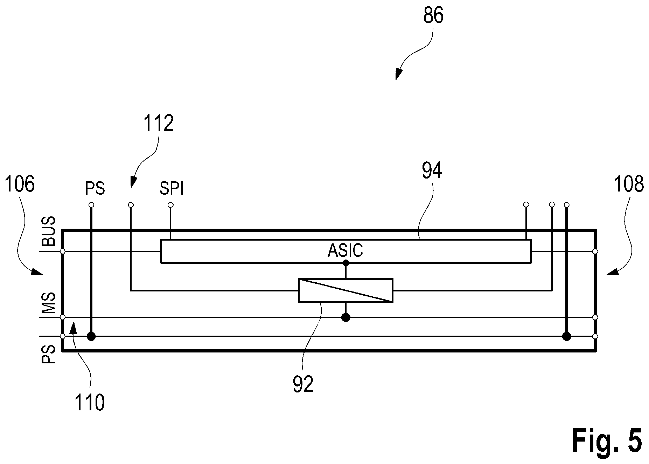

Fig. 5 zeigt eine schematische Darstellung eines Ausführungsbeispiels eines Backplane-Modulteils 86.

Das Backplane-Modulteil 86 stellt die Versorgungs- und Kommunikationsverbindungen zwischen den einzelnen Komponenten der modularen Steuervorrichtung bereit. Hierfür lassen sich eine Vielzahl von Backplane-Modulteilen zu einer Reihe zusammenschalten, um eine Busstruktur sowohl für die Kommunikation als auch für die Spannungsversorgung bereitzustellen. Jedes Backplane-Modulteil 86 verfügt über einen Satz erster Anschlüsse 106 zur Verbindung mit dem linken Nachbarmodul und einem Satz entsprechender zweiter Anschlüsse 108 zur Verbindung mit dem rechten Nachbarmodul. Verbindungsleitungen 110 verbinden die ersten Anschlüsse 106 mit den entsprechenden Gegenstücken der zweiten Anschlüsse 108. Die ersten und zweiten Anschlüsse 106, 108 weisen in dem hier gezeigten Ausführungsbeispiel einen Anschluss MS für die Modulspannung, einen Anschluss PS für die Peripheriespannung sowie einen Anschluss BUS für den Kommunikationsbus auf.

Über einen weiteren Satz Anschlüsse 112 werden die dem Backplane-Modulteil 86 zugeordneten Modulteile mit der Busstruktur verbunden. Der Anschlüsse 112 können direkte oder indirekte Verbindungen zu den jeweiligen Verbindungsleitungen 110 aufweisen. Bspw. kann, wie in Fig. 5 gezeigt, die Peripheriespannung dem angeschlossenen Modulteil direkt zugeführt werden, während die Modulspannung zunächst durch ein im Backplane-Modulteil 86 integriertes Netzteil 92 umgesetzt wird.

Ferner kann das Backplane-Modulteil 86, wie bereits zuvor beschrieben, eine Verbindung zum Kommunikationsbus für die angeschlossenen Module bereitstellen. Die Verbindung kann über ein im Backplane-Modulteil 86 integrierten Kontrollbaustein 94 erfolgen. Die Kontrollbausteine 94 der aneinandergereihten Backplane-Modulteile 86 bilden Konten des Kommunikationsbusses und können bspw. als ASICs realisiert sein. Der Kontrollbaustein 94 kann Daten an das nächste Backplane-Modul weiterleiten, oder Daten entnehmen und dem angeschlossenen Modulteil zuführen, falls die Daten für dieses Modul bestimmt sind. Die Verbindung zwischen dem Kontrollbaustein 94 und einer Verarbeitungseinheit des angeschlossenen Modulteils kann über ein SPI erfolgen. Über das SPI kann die Verarbeitungseinheit Daten vom Kommunikationsbus empfangen und Daten zum Versenden an den Bus abgeben.

Durch die vorstehende Ausgestaltung der Backplane-Modulteile 86 können die Backplane-Modulteile 86 zur sicherheitsrelevanten Trennung der Betrachtungseinheiten in Form der Peripheriemodulteile beitragen. Eine Trennung kann über die Kontrollbausteine gegeben sein, zu denen jedes Peripheriemodulteil eine dedizierte Verbindung über ein SPI haben kann. Ferner kann durch den Einsatz von separaten Backplane-Modulteilen 86 für jede Betrachtungseinheit sichergestellt werden, dass jede Betrachtungseinheit auch über ein separates Netzteil 92 zur Spannungsversorgung verfügt.

Es versteht sich, dass das Backplane-Modulteil 86 nur exemplarisch zu verstehen ist und andere Ausgestaltungen denkbar sind, um die Peripheriemodulteile und das Kopfmodul miteinander zu verbinden.

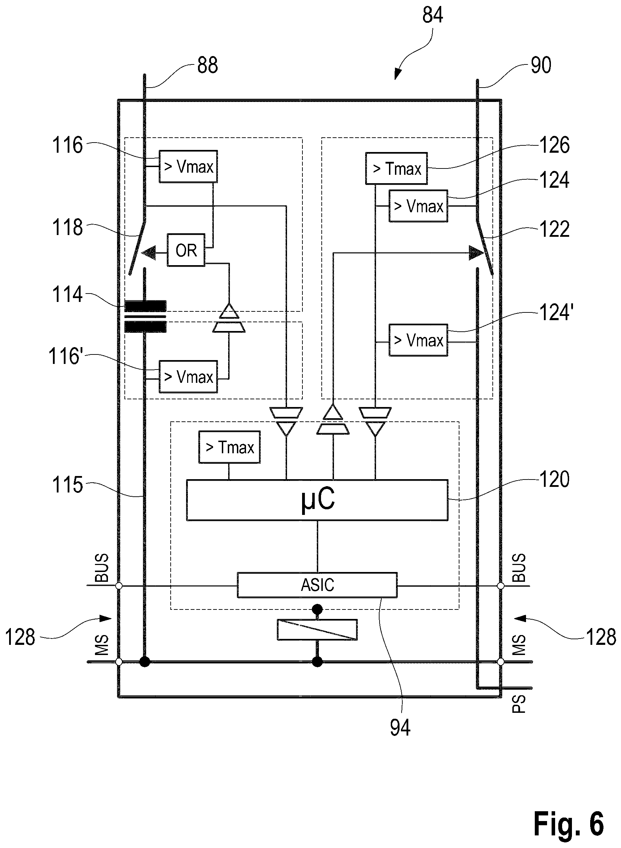

Fig. 6 zeigt abschließend eine schematische Darstellung eines Ausführungsbeispiels eines Spannungsversorgungsmoduls. Das Spannungsversorgungsmodul ist in seiner Gesamtheit mit der Bezugsziffer 84 bezeichnet.

Das Spannungsversorgungsmodul 84 weist Anschlüsse 88, 90 auf, um eine externe Versorgungsspannung aufnehmen zu können. Am Anschluss 88 wird die zuvor beschriebene Modulspannung MS und am Anschluss 90 die zuvor beschriebene Peripheriespannung PS zugeführt. Im vorliegenden Ausführungsbeispiel weist das Spannungsversorgungsmodul 84 zudem Maßnahmen zur Überwachung der zugeführten Spannung auf.

Die externe Versorgungsspannung für MS kann von einem SELV/PELV-Netzteil bereitgestellt werden. Die Nennspannung kann die industrieüblichen 24 V betragen. Eine Transildiode an den Anschlüssen 88, 90 (hier nicht dargestellt) kann Spannungsspitzen auf etwa 36 V beschränken. Die Versorgungsspannung wird durch einen Übertrager 114 auf die galvanisch getrennte Versorgungsspannungsschiene 115 geleitet, deren Nennspannung ebenfalls 24 V betragen kann. Primär- und sekundärseitig des Übertragers 114 befinden sich Spannungsüberwachungseinrichtungen 116, die bspw. auf 38 V eingestellt sind. Wird eine Spannung größer 38 V detektiert, wird die Verbindung vor dem Übertrager 114 durch ein Schaltelement 118 getrennt.

Die externe Versorgungsspannung für PS kann ebenfalls aus einem SELV/PELV-Netzteil erfolgen. Diese Spannung kann von einer Verarbeitungseinheit 120 des Spannungsversorgungsmoduls 84 über das Schaltelement 122 freigegeben werden. Die Verarbeitungseinheit 120 kann hierfür eine Spannung vor dem Schaltelement 122 mittels einer Spannungsüberwachungseinrichtung 124, die Temperatur an der PS-Schiene mittels eines Temperatursensors 126 sowie den Zustand der PS-Schiene hinter dem Schaltelement 122 mittels einer weiteren Spannungsüberwachungseinrichtung 124' erfassen, bewerten und entsprechend reagieren.

Über Anschlüsse 128, die mit den ersten Anschlüssen 106 eines Backplane-Modulteils 86 korrespondieren können, werden die Modulspannung MS und die Peripheriespannung PS an die angeschlossenen Module weitergeleitet. Ferner kann das Spannungsversorgungsmodul 84 mit dem Kommunikationsbus gekoppelt sein. Hierfür kann innerhalb des Spannungsversorgungsmoduls 84 ein weiterer Kontrollbaustein 94 vorgesehen sein, der in der zuvor beschriebenen Weise der Verarbeitungseinheit 120 einen Zugriff auf den Kommunikationsbus ermöglicht. Die Verarbeitungseinheit 120 und der Kontrollbaustein 94 können über ein weiteres Netzteil 92 aus des Versorgungsspannungsschiene 115 gespeist werden.

Es versteht sich, dass auch das Spannungsversorgungsmodul 84 nur exemplarisch zu verstehen ist und auch eine andere Spannungsversorgung für die modulare Steuervorrichtung denkbar ist. Das Spannungsversorgungsmodul 84 muss prinzipiell keine sichere Einheit sein.

## Patentansprüche

1. Kopfmodul (10) für eine modulare Steuervorrichtung (100) mit redundanten Kanaleinheiten (12, 14), die jeweils eine Verarbeitungseinheit (18; 24) sowie Ausfalloffenbarungseinheiten (20, 22, 26, 28) aufweisen,
wobei die Ausfalloffenbarungseinheiten (20, 22, 26, 28) eingerichtet sind, einen Zustand der jeweiligen Kanaleinheit (12; 14) zu überwachen, und wobei die Verarbeitungseinheiten (18, 24) dazu eingerichtet sind, die Ausfalloffenbarungseinheiten (20, 22, 26, 28) kontinuierlich anzuregen,
wobei mindestens eine Verarbeitungseinheit (18) der redundanten Kanaleinheiten (12, 14) mit Signaladern eines Kommunikationsbusses gekoppelt ist, um eine Kommunikationsverbindung zu einem oder mehreren Peripheriemodulteilen (50) der modularen Steuervorrichtung (100) bereitzustellen, und
wobei die Ausfalloffenbarungseinheiten (20, 22, 26, 28) dazu eingerichtet sind, in Abhängigkeit der Anregung und der Überwachung auf eine Busabschaltungseinheit (36) einzuwirken,
wobei die Busabschaltungseinheit (36) je Kanaleinheit (12, 14) ein Schaltelement (38) in den Signaladern des Kommunikationsbusses aufweist, und wobei die Ausfalloffenbarungseinheiten (20, 22, 26, 28) jeder Kanaleinheit dazu eingerichtet sind, auf das zugehörige Schaltelement (38) gemeinschaftlich zu wirken, um die Signaladern des Kommunikationsbusses aufzutrennen, den Kommunikationsbus stillzusetzen, und jegliche Kommunikation über den Kommunikationsbus fehlersicher zu unterbinden.

2. Kopfmodul nach Anspruch 1, wobei die Ausfalloffenbarungseinheiten (20, 22, 26, 28) je Kanaleinheit (12, 14) eine Überwachungseinheit (22; 28) und eine Ausfallerkennungseinheit (20; 26) aufweisen, wobei die Überwachungseinheiten (22; 28) eingerichtet sind, Netzteile (30, 32) der Kanaleinheiten zu überwachen, und wobei die Ausfallerkennungseinheiten (20, 26) einrichtet sind, in Abhängigkeit der Anregung ein Signal bereitzustellen.

3. Kopfmodul nach 2, wobei die Überwachungseinheiten (22, 28) jeder Kanaleinheit eingerichtet sind, in Abhängigkeit der Überwachung ein dynamisches Steuersignal zu erzeugen, um auf das jeweils zugehörige Schaltelement (38) zu wirken, insbesondere, wobei die Ausfallerkennungseinheiten (20, 26) eingerichtet sind, in Abhängigkeit der Anregung der jeweiligen Verarbeitungseinheit (18; 24) die Erzeugung des dynamischen Steuersignals zu unterbrechen.

4. Kopfmodul nach einem der Ansprüche 1 bis 3, ferner aufweisend mindestens einen Längskondensator, der in einem Signalpfad der Ausfalloffenbarungseinheiten (20, 22, 26, 28) in jeder Kanaleinheit zwischen der Verarbeitungseinheit (18; 24) und der Busabschaltungseinheit (36) angeordnet ist.

5. Kopfmodul nach einem der vorstehenden Ansprüche, wobei die Kanaleinheiten (12, 14) eingerichtet sind, ausschließlich über den Kommunikationsbus mit dem einen oder mehreren Peripheriemodulteilen (50) der modularen Steuervorrichtung (100) zu kommunizieren.

6. Kopfmodul nach einem der vorstehenden Ansprüche, wobei die Verarbeitungseinheiten (18, 24) jeder Kanaleinheit dazu eingerichtet sind, untereinander über eine von dem Kommunikationsbus unabhängige Schnittstelle zu kommunizieren und sich gegenseitig zu überwachen.

7. Kopfmodul nach Anspruch 6, wobei ein Überspannungsschutz für die Schnittstelle in Abhängigkeit einer jeweils bereitgestellten und überwachten Versorgungsspannung ausgelegt ist, und insbesondere aus Widerständen gebildet ist, deren Größen an eine Abschaltspannung der Überwachungseinheiten (22, 28) angepasst sind.

8. Kopfmodul nach einem der vorstehenden Ansprüche, wobei die Verarbeitungseinheiten (18, 24) jeder Kanaleinheit dazu eingerichtet sind, einen Funktionstest der jeweils zugehörigen Ausfalloffenbarungseinheiten (20, 22, 26, 28) durchzuführen und ein Testergebnis zurückzulesen, und insbesondere der jeweils anderen Verarbeitungseinheit bereitzustellen.

9. Modulare Steuervorrichtung (100), aufweisend:
ein Kopfmodul (10) nach einem der Ansprüche 1 bis 8, sowie mindestens
ein Peripheriemodulteil (50) mit redundanten Kanaleinheiten (52, 54) und einer Ausgangseinheit (56), wobei die Ausgangseinheit (56) eingerichtet ist, durch Ansteuerung durch die redundanten Kanaleinheiten (52, 54), einen Ausgang (70) zu schalten, wobei die Kanaleinheiten (52, 54) jeweils eine Verarbeitungseinheit (58; 64) und Ausfalloffenbarungseinheiten (60, 62 66, 68) aufweisen, wobei die Ausfalloffenbarungseinheiten (60, 62 66, 68) eingerichtet sind, eine den Kanaleinheiten gemeinsame Versorgungsspannung zu überwachen, wobei die Verarbeitungseinheiten (58, 64) eingerichtet sind, jeweils die Ausfalloffenbarungseinheiten (60, 62 66, 68) anzuregen, und wobei die Ausfalloffenbarungseinheiten (60, 62 66, 68) jeder Kanaleinheit gemeinschaftlich dazu eingerichtet sind, in Abhängigkeit der Anregung und der Überwachung auf die Ausgangseinheit (56) zu wirken, um den Ausgang (70) anzusteuern.

10. Modulare Steuervorrichtung nach Anspruch 9, mit mindestens einem ersten Peripheriemodulteil und einem zweiten Peripheriemodulteil, wobei eine erste Kanaleinheit (12) des Kopfmoduls (10) eine erste funktionale Einheit mit dem ersten Peripheriemodulteil bildet und eine zweite Kanaleinheit (14) des Kopfmoduls (10) eine von der ersten funktionalen Einheit unabhängige zweite funktionale Einheit mit dem zweiten Peripheriemodulteil bildet, insbesondere wobei das Kopfmodul (10) und das erste Peripheriemodulteil und das zweite Peripheriemodulteil ausschließlich über den Kommunikationsbus miteinander kommunizieren.

11. Modulare Steuervorrichtung nach Anspruch 9 oder 10, ferner aufweisend ein Spannungsversorgungsmodul (84), das eingerichtet ist, eine gemeinsame Modulspannung für eine Spannungsversorgung des Kopfmoduls (10) und des mindestens einen Peripheriemodulteils (50) sowie eine Peripheriespannung für die Ausgangseinheit (56) des mindestens einen Peripheriemodulteils (50) bereitzustellen, insbesondere wobei das Spannungsversorgungsmodul (84) eine nicht-sichere Einheit ist.

12. Modulare Steuervorrichtung nach Anspruch 11, wobei das Spannungsversorgungsmodul (84) die Modulspannung und/oder die Peripheriespannung aus einem SELV/PELV-Netzteil speist.

13. Modulare Steuervorrichtung nach Anspruch 11 oder 12, wobei das Spannungsversorgungsmodul (84) eine Trenneinrichtung (114) aufweist, die eine bereitgestellte Modulspannung von einer Spannungszuführung galvanisch trennt.

14. Modulare Steuervorrichtung nach einem der Ansprüche 9 bis 13, wobei die Ausfalloffenbarungseinheiten (60, 62 66, 68) jeder Kanaleinheit dazu eingerichtet sind, in Abhängigkeit der Überwachung ein dynamisches Steuersignal zu erzeugen, um auf die Ausgangseinheit (56) zu wirken, insbesondere wobei die Ausfalloffenbarungseinheiten (60, 62 66, 68) jeder Kanaleinheit eingerichtet sind, in Abhängigkeit der Anregung durch die jeweilige Verarbeitungseinheit die Erzeugung des dynamischen Steuersignals zu unterbrechen.

15. Verfahren für ein Kopfmodul einer modularen Steuerung, wobei das Kopfmodul (10) redundante Kanaleinheiten (12, 14) aufweist, die jeweils eine Verarbeitungseinheit (18; 24) sowie Ausfalloffenbarungseinheiten (20, 22, 26, 28) aufweisen,
wobei die Ausfalloffenbarungseinheiten (20, 22, 26, 28) einen Zustand der jeweils zugehörigen Kanaleinheit (12; 14) überwachen und die Verarbeitungseinheiten (18, 24) die Ausfalloffenbarungseinheiten (20, 22, 26, 28) kontinuierlich anregen,
wobei mindestens eine der Verarbeitungseinheiten (18) mit Signaladern eines Kommunikationsbusses gekoppelt ist, um eine Kommunikationsverbindung zu einem oder mehreren Peripheriemodulteilen (50) der modularen Steuervorrichtung (100) bereitzustellen, und
wobei die die Ausfalloffenbarungseinheiten (20, 22, 26, 28) in Abhängigkeit der Anregung und der Überwachung auf eine Busabschaltungseinheit (36) wirken,
wobei die Busabschaltungseinheit (36) je Kanaleinheit (12, 14) ein Schaltelement (38) in den Signaladern des Kommunikationsbusses aufweist, und wobei die Ausfalloffenbarungseinheiten (20, 22, 26, 28) jeder Kanaleinheit auf das zugehörige Schaltelement (38) gemeinschaftlich wirken, um die Signaladern des Kommunikationsbus aufzutrennen, den Kommunikationsbus stillzusetzen, und jegliche Kommunikation über den Kommunikationsbus fehlersicher zu unterbinden.

## Claims

1. A head module (10) for a modular control device (100) having redundant channel units (12, 14), each of which comprises a processing unit (18; 24) and failure detection units (20, 22, 26, 28),
wherein the failure detection units (20, 22, 26, 28) are configured to monitor a state of the respective channel unit (12; 14), and wherein the processing units (18, 24) are configured to continuously stimulate the failure detection units (20, 22, 26, 28),
wherein at least one processing unit (18) of the redundant channel units (12, 14) is coupled to signal lines of a communication bus in order to provide a communication connection to one or more peripheral module parts (50) of the modular control device (100), and
wherein the failure detection units (20, 22, 26, 28) are configured to act on a bus disconnection unit (36) depending on the stimulation and the monitoring,
wherein the bus disconnection unit (36) comprises, for each channel unit (12, 14), a switching element (38) in the signal lines of the communication bus, and wherein the failure detection units (20, 22, 26, 28) of each channel unit are configured to jointly act on the associated switching element (38) in order to interrupt the signal lines of the communication bus, bring the communication bus to a standstill, and inhibit any communication via the communication bus in a fail-safe manner.

2. The head module according to claim 1, wherein the failure detection units (20, 22, 26, 28) of each channel unit (12, 14) comprise a monitoring unit (22; 28) and a failure detection unit (20; 26), wherein the monitoring units (22; 28) are configured to monitor power supply units (30, 32) of the channel units, and wherein the failure detection units (20, 26) are configured to provide a signal based on the stimulation.

3. The head module according to claim 2, wherein the monitoring units (22, 28) of each channel unit are configured to generate a dynamic control signal depending on the monitoring in order to act on the respective associated switching element (38), in particular wherein the failure detection units (20, 26) are configured to interrupt the generation of the dynamic control signal depending on the stimulation by the respective processing unit (18; 24).

4. The head module according to any one of claims 1 to 3, further comprising at least one series capacitor disposed in a signal path of the failure detection units (20, 22, 26, 28) in each channel unit between the processing unit (18; 24) and the bus disconnection unit (36).

5. The head module according to any one of the preceding claims, wherein the channel units (12, 14) are configured to communicate exclusively via the communication bus with the one or more peripheral module parts (50) of the modular control device (100).

6. The head module according to any one of the preceding claims, wherein the processing units (18, 24) of each channel unit are configured to communicate with each other and to monitor each other via an interface that is independent of the communication bus.

7. The head module according to claim 6, wherein an overvoltage protection for the interface is configured depending on a respective provided and monitored supply voltage, and in particular is formed of resistors whose sizes are adapted to a cutoff voltage of the monitoring units (22, 28).

8. The head module according to any one of the preceding claims, wherein the processing units (18, 24) of each channel unit are configured to perform a functional test of the respective associated failure detection units (20, 22, 26, 28) and to read back a test result, and in particular to provide it to the respective other processing unit.

9. A modular control device (100), comprising:
a head module (10) according to any one of claims 1 to 8, and at least one
peripheral module part (50) having redundant channel units (52, 54) and an output unit (56), wherein the output unit (56) is configured to switch an output (70) by controlling the redundant channel units (52, 54), wherein the channel units (52, 54) each comprise a processing unit (58, 64) and failure detection units (60, 62, 66, 68), wherein the failure detection units (60, 62, 66, 68) are configured to monitor a supply voltage common to the channel units, wherein the processing units (58, 64) are configured to stimulate the failure detection units (60, 62, 66, 68), and wherein the failure detection units (60, 62, 66, 68) of each channel unit are jointly configured to act on the output unit (56) depending on the stimulation and the monitoring in order to drive the output (70).

10. The modular control device according to claim 9, comprising at least a first peripheral module part and a second peripheral module part, wherein a first channel unit (12) of the head module (10) forms a first functional unit with the first peripheral module part and a second channel unit (14) of the head module (10) forms a second functional unit independent of the first functional unit with the second peripheral module part, in particular wherein the head module (10), the first peripheral module part, and the second peripheral module part communicate with each other exclusively via the communication bus.

11. The modular control device according to claim 9 or 10, further comprising: a power supply module (84) configured to provide a common module voltage for supplying power to the head module (10) and the at least one peripheral module part (50), and a peripheral voltage for the output unit (56) of the at least one peripheral module part (50), in particular wherein the power supply module (84) is a non-safe unit.

12. The modular control device according to claim 11, wherein the power supply module (84) supplies the module voltage and/or the peripheral voltage from an SELV/PELV power supply.

13. The modular control device according to claim 11 or 12, wherein the power supply module (84) comprises a separating device (114) that galvanically isolates a provided module voltage from a voltage supply.

14. The modular control device according to any one of claims 9 to 13, wherein the failure detection units (60, 62, 66, 68) of each channel unit are configured to generate a dynamic control signal depending on the monitoring in order to act on the output unit (56), in particular wherein the failure detection units (60, 62, 66, 68) of each channel unit are configured to interrupt the generation of the dynamic control signal depending on the stimulation by the respective processing unit.

15. A method for a head module of a modular control device, wherein the head module (10) comprises redundant channel units (12, 14), each comprising a processing unit (18, 24) and failure detection units (20, 22, 26, 28),
wherein the failure detection units (20, 22, 26, 28) monitor a state of the respective associated channel unit (12, 14) and the processing units (18, 24) continuously stimulate the failure detection units (20, 22, 26, 28),
wherein at least one of the processing units (18) is coupled to signal lines of a communication bus in order to provide a communication connection to one or more peripheral module parts (50) of the modular control device (100), and
wherein the failure detection units (20, 22, 26, 28) act on a bus disconnection unit (36) depending on the stimulation and the monitoring,
wherein the bus disconnection unit (36) comprises, for each channel unit (12, 14), a switching element (38) in the signal lines of the communication bus, and wherein the failure detection units (20, 22, 26, 28) of each channel unit jointly act on the associated switching element (38) in order to interrupt the signal lines of the communication bus, bring the communication bus to a standstill, and inhibit any communication via the communication bus in a fail-safe manner.

## Revendications

1. Module formant tête (10) pour un dispositif de commande modulaire (100) comportant des unités formant canaux (12, 14) redondantes, lesquelles présentent respectivement une unité de traitement (18 ; 24) ainsi que des unités de notification d'anomalie (20, 22, 26, 28),
dans lequel les unités de notification d'anomalie (20, 22, 26, 28) sont configurées pour surveiller un état de l'unité formant canal (12 ; 14) respective, et dans lequel les unités de traitement (18, 24) sont configurées pour exciter en continu les unités de notification d'anomalie (20, 22, 26, 28),
dans lequel au moins une unité de traitement (18) des unités formant canaux (12, 14) redondantes est couplée à des conducteurs de signaux d'un bus de communication afin de fournir une connexion de communication à une ou plusieurs parties formant modules périphériques (50) du dispositif de commande modulaire (100), et
dans lequel les unités de notification d'anomalie (20, 22, 26, 28) sont configurées pour agir sur une unité d'interruption de bus (36) en fonction de l'excitation et de la surveillance,
dans lequel l'unité d'interruption de bus (36) présente, pour chaque unité formant canal (12, 14), un élément de commutation (38) dans les conducteurs de signaux du bus de communication, et dans lequel les unités de notification d'anomalie (20, 22, 26, 28) de chaque unité formant canal sont configurées pour agir conjointement sur l'élément de commutation (38) associé afin de couper les conducteurs de signaux du bus de communication, de mettre le bus de communication hors service, et d'empêcher de manière sécurisée contre les erreurs toute communication par l'intermédiaire du bus de communication.

2. Module formant tête selon la revendication 1, dans lequel les unités de notification d'anomalie (20, 22, 26, 28) présentent, pour chaque unité formant canal (12, 14), une unité de surveillance (22 ; 28) et une unité de reconnaissance d'anomalie (20 ; 26), dans lequel les unités de surveillance (22 ; 28) sont configurées pour surveiller des parties formant réseaux (30, 32) des unités formant canaux, et dans lequel les unités de reconnaissance d'anomalie (20, 26) sont configurées pour fournir un signal en fonction de l'excitation.

3. Module formant tête selon 2, dans lequel les unités de surveillance (22, 28) de chaque unité formant canal sont configurées pour générer, en fonction de la surveillance, un signal de commande dynamique afin d'agir sur l'élément de commutation (38) respectivement associé, en particulier dans lequel les unités de reconnaissance d'anomalie (20, 26) sont configurées pour interrompre la génération du signal de commande dynamique en fonction de l'excitation de l'unité de traitement (18 ; 24) respective.

4. Module formant tête selon l'une des revendications 1 à 3, présentant en outre au moins un condensateur longitudinal disposé dans un chemin de signal des unités de notification d'anomalie (20, 22, 26, 28) dans chaque unité formant canal entre l'unité de traitement (18 ; 24) et l'unité d'interruption de bus (36).

5. Module formant tête selon l'une des revendications précédentes, dans lequel les unités formant canaux (12, 14) sont configurées pour communiquer exclusivement par l'intermédiaire du bus de communication avec la ou les parties formant modules périphériques (50) du dispositif de commande modulaire (100).

6. Module formant tête selon l'une des revendications précédentes, dans lequel les unités de traitement (18, 24) de chaque unité formant canal sont configurées pour communiquer entre elles et se surveiller mutuellement par l'intermédiaire d'une interface indépendante du bus de communication.

7. Module formant tête selon la revendication 6, dans lequel un coupe-circuit de surtension pour l'interface est configuré en fonction d'une tension d'alimentation respectivement fournie et surveillée, et est formé en particulier de résistances dont les grandeurs sont adaptées à une tension d'interruption des unités de surveillance (22, 28).

8. Module formant tête selon l'une des revendications précédentes, dans lequel les unités de traitement (18, 24) de chaque unité formant canal sont configurées pour mettre en œuvre un test de fonctionnement des unités de notification d'anomalie (20, 22, 26, 28) respectivement associées et pour lire en retour un résultat de test, et en particulier pour le fournir à l'autre unité de traitement respective.

9. Dispositif de commande modulaire (100), présentant :
un module formant tête (10) selon l'une des revendications 1 à 8, ainsi qu'au moins une partie formant module périphérique (50) comportant des unités formant canaux (52, 54) redondantes et une unité de sortie (56), dans lequel l'unité de sortie (56) est configurée pour commuter une sortie (70) par activation par les unités formant canaux (52, 54) redondantes, dans lequel les unités formant canaux (52, 54) présentent respectivement une unité de traitement (58 ; 64) et des unités de notification d'anomalie (60, 62 66, 68), dans lequel les unités de notification d'anomalie (60, 62 66, 68) sont configurées pour surveiller une tension d'alimentation commune aux unités formant canaux, dans lequel les unités de traitement (58, 64) sont configurées pour exciter respectivement les unités de notification d'anomalie (60, 62 66, 68), et dans lequel les unités de notification d'anomalie (60, 62 66, 68) de chaque unité formant canal sont configurées conjointement pour agir sur l'unité de sortie (56) en fonction de l'excitation et de la surveillance afin d'activer la sortie (70).

10. Dispositif de commande modulaire selon la revendication 9, comportant au moins une première partie formant module périphérique et une seconde partie formant module périphérique, dans lequel une première unité formant canal (12) du module formant tête (10) forme une première unité fonctionnelle avec la première partie formant module périphérique et une seconde unité formant canal (14) du module formant tête (10) forme une seconde unité fonctionnelle, indépendante de la première unité fonctionnelle, avec la seconde partie formant module périphérique, en particulier dans lequel le module formant tête (10) et la première partie formant module périphérique et la seconde partie formant module périphérique communiquent entre eux exclusivement par l'intermédiaire du bus de communication.

11. Dispositif de commande modulaire selon la revendication 9 ou 10, présentant en outre un module d'alimentation en tension (84) configuré pour fournir une tension de module commune pour une alimentation en tension du module formant tête (10) et de l'au moins une partie formant module périphérique (50), ainsi qu'une tension périphérique pour l'unité de sortie (56) de l'au moins une partie formant module périphérique (50), en particulier dans lequel le module d'alimentation en tension (84) est une unité non sécurisée.

12. Dispositif de commande modulaire selon la revendication 11, dans lequel le module d'alimentation en tension (84) alimente la tension de module et/ou la tension périphérique à partir d'une alimentation SELV/PELV.

13. Dispositif de commande modulaire selon la revendication 11 ou 12, dans lequel le module d'alimentation en tension (84) présente un appareil de séparation (114) qui sépare galvaniquement une tension de module fournie d'un bloc d'alimentation en tension.

14. Dispositif de commande modulaire selon l'une des revendications 9 à 13, dans lequel les unités de notification d'anomalie (60, 62 66, 68) de chaque unité formant canal sont configurées pour générer, en fonction de la surveillance, un signal de commande dynamique afin d'agir sur l'unité de sortie (56), en particulier dans lequel les unités de notification d'anomalie (60, 62 66, 68) de chaque unité formant canal sont configurées pour interrompre la génération du signal de commande dynamique en fonction de l'excitation par l'unité de traitement respective.

15. Procédé pour un module formant tête d'une commande modulaire, dans lequel le module formant tête (10) présente des unités formant canaux (12, 14) redondantes, lesquelles présentent respectivement une unité de traitement (18 ; 24) ainsi que des unités de notification d'anomalie (20, 22, 26, 28),
dans lequel les unités de notification d'anomalie (20, 22, 26, 28) surveillent un état de l'unité formant canal (12 ; 14) respectivement associée et les unités de traitement (18, 24) excitent en continu les unités de notification d'anomalie (20, 22, 26, 28),
dans lequel au moins l'une des unités de traitement (18) est couplée à des conducteurs de signaux d'un bus de communication afin de fournir une connexion de communication à une ou plusieurs parties formant modules périphériques (50) du dispositif de commande modulaire (100), et
dans lequel les unités de notification d'anomalie (20, 22, 26, 28) agissent sur une unité d'interruption de bus (36) en fonction de l'excitation et de la surveillance,
dans lequel l'unité d'interruption de bus (36) présente, pour chaque unité formant canal (12, 14), un élément de commutation (38) dans les conducteurs de signaux du bus de communication, et dans lequel les unités de notification d'anomalie (20, 22, 26, 28) de chaque unité formant canal agissent conjointement sur l'élément de commutation (38) associé afin de couper les conducteurs de signaux du bus de communication, de mettre le bus de communication hors service, et d'empêcher de manière sécurisée contre les erreurs toute communication par l'intermédiaire du bus de communication.
